# EUROPEAN PATENT SPECIFICATION

(11) **EP 4 418 414 B1**
(45) Date of publication and mention of the grant of the patent: **06.05.2026**
(21) Application number: 22881404.2
(22) Date of filing: 14.10.2022
(51) Int. Cl.: H01M 50/129, H01M 50/178, H01M 50/586, H01M 50/557, H01M 50/186, H01M 50/105

(54) **POUCH-TYPE SECONDARY BATTERY, SECONDARY BATTERY MODULE INCLUDING SAME, AND POUCH USED THEREFOR**
BEUTELARTIGE SEKUNDÄRBATTERIE, SEKUNDÄRBATTERIEMODUL DAMIT UND DAFÜR VERWENDETER BEUTEL
BATTERIE SECONDAIRE DE TYPE POCHE, MODULE DE BATTERIE SECONDAIRE LA COMPRENANT, ET POCHE UTILISÉE À CET EFFET

(30) Priority: 14.10.2021 KR 20210136975; 12.10.2022 KR 20220130928
(43) Date of publication of application: 21.08.2024
(73) Proprietor: LG Energy Solution, Ltd., Seoul 07335 (KR)
(72) Inventor: CHOI, Yong Joon, Daejeon 34122 (KR); KIM, Soo Youl, Daejeon 34122 (KR); LEE, Dong Su, Daejeon 34122 (KR)
(74) Representative: Goddar, Heinz J.
(86) International application number: PCT/KR2022/015600
(87) International publication number: WO 2023/063777

(56) References cited:
- JP-A- 2006 339 042
- JP-A- 2006 339 042
- JP-A- 2007 095 465
- JP-A- 2012 209 125
- KR-A- 20060 059 685
- KR-A- 20160 133 041

## Description

### TECHNICAL FIELD

### CROSS-REFERENCE TO RELATED APPLICATION

The present application claims the benefit of the priority of Korean Patent Application Nos. 10-2021-0136975, filed on October 14, 2021, and 10-2022-0130928, filed on October 12, 2022.

### TECHNICAL FIELD

The present disclosure relates to a pouch type secondary battery, a secondary battery module including the same, and a pouch sealing method for sealing such a pouch type secondary battery, with the aim to provide a pouch type secondary battery with improved electrically insulation performance, and a secondary battery module including the same.

### BACKGROUND ART

JP 2006 339042 A relates to a battery, and more particularly to a battery having a battery case made of a laminate film formed by laminating a metal film and a resin film.

Batteries (cells) that generate electrical energy through a physical reaction or a chemical reaction of a substance to supply power to the outside are used when AC power to be supplied to a building is not obtained or DC power is required, according to living environments surrounded by various electronic devices.

Among such batteries, primary batteries and secondary batteries that are chemical batteries using the chemical reaction are generally used a lot. The primary batteries are consumable batteries that are collectively referred to as dry batteries. The secondary batteries are rechargeable batteries that are manufactured using a material in which a redox process between a current and a material is repeatable several times. When a reduction reaction is performed on the material by the current, power is charged, and when an oxidation reaction is performed on the material, power is discharged. Such a charging-discharging is repeatedly performed to generate electricity.

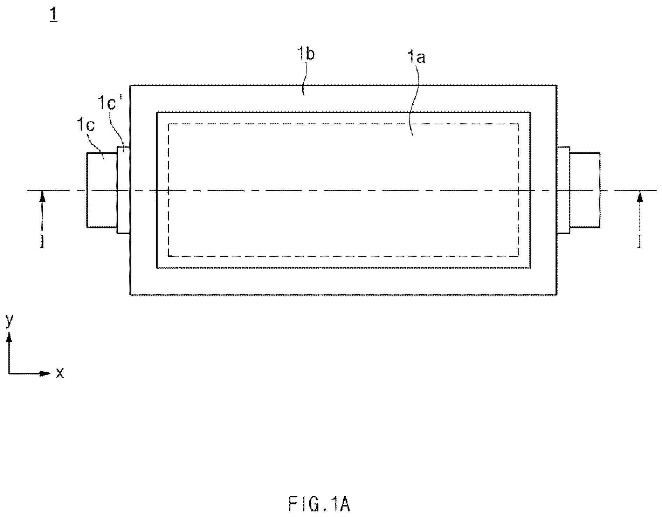

In recent market, attention has been paid to a pouch type secondary battery 1 having a small volume and a high degree of freedom in design. In more detail, as illustrated in FIG. 1a, the pouch type secondary battery 1 may include an electrode assembly 1a including a positive electrode/separator/negative electrode, a pouch 1b in which the electrode assembly 1a is accommodated, and an electrode lead 1c electrically connected to the positive electrode/negative electrode of the outside of the electrode assembly 1a and protruding from the outside of the pouch 1b. Here, a lead film 1c' made of an electrically insulating material may be attached to each of both surfaces of the electrode lead 1c.

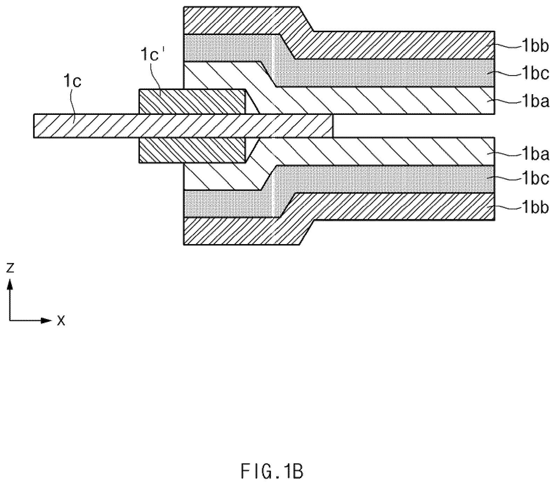

Here, the pouch 1b is constituted generally by a stack of various thin functional films. As a representative example, the pouch 1b may have a structure in which an inner electrically insulating layer 1ba for isolation of internal components of the pouch 1b, a metal layer 1bc that maintains mechanical strength of the pouch 1b, and an outer electrically insulating layer 1bb that electrically insulates the metal layer 1bc from an external component, are stacked in sequence from the inside toward the outside, as illustrated in FIG. 1b.

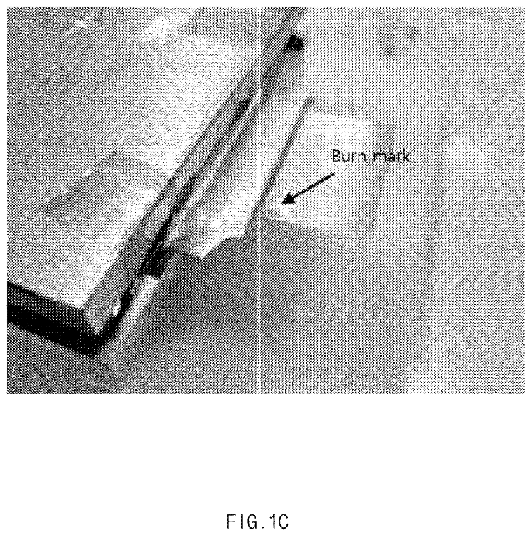

However, the pouch type secondary battery 1 having such a structure has problems that as the metal layer 1bc is exposed to the outside at a side surface of an edge of the pouch 1b, a leakage current occurs to degrade performance of the secondary battery. In particular, there is a problem that due to failure to secure a sufficient separation distance for electrical insulation between the metal layer 1bc exposed to the outside and the electrode lead 1c, an arc occurs during applying an external voltage to cause damage (e.g., burn mark) to the secondary battery 10 (1) (see FIG. 1c).

When the pouch type secondary battery 1 having the structure as described above is used to provide one secondary battery module, electrical insulation between the metal layer 1bc of the pouch type secondary battery 1 and a module housing (not shown) made of a metal material is required. Thus, there is a problem of requiring an additional electrical insulation design, for example, the pouch type secondary battery 1 is disposed apart from the module housing or a structure made of an electrically insulating material is inserted between the pouch type secondary battery 1 and the module housing.

### DISCLOSURE OF THE INVENTION

### TECHNICAL PROBLEM

The present invention has been devised to solve the problems as above and an object of the present invention is to provide a pouch type secondary battery with improved electrical insulation performance, a secondary battery module comprising a plurality of such pouch type secondary batteries, and a pouch sealing method for sealing such a pouch type secondary battery.

### TECHNICAL SOLUTION

The present invention provides a pouch type secondary battery as defined in claim 1; a secondary battery module comprising a plurality of such pouch type secondary batteries, as defined in claim 6; and a pouch sealing method for sealing such a pouch type secondary battery, as defined in claim 7.

Accordingly, the pouch type secondary battery includes an electrode lead connected to the electrode and protruding from the pouch toward the outside, and the insulating edge part is disposed at a position corresponding to the electrode lead.

The electrode lead may protrude from at least one end of the pouch toward the outside.

At least one of the first insulating layer or the second insulating layer may have a synthetic resin material.

The first insulating layer may include polypropylene (PP).

The second insulating layer may include polyethylene terephthalate (PET).

### ADVANTAGEOUS EFFECTS

The pouch type secondary battery according to the present invention, and the secondary battery module including the same, include the electrically insulating edge part in the edge part to have the effect that the electrical insulation performance of the secondary battery may be improved.

The electrically insulating edge part is disposed at the position corresponding to the electrode lead to secure a sufficient electrical insulation distance between the electrode lead and the metal layer, which constitutes the pouch, to thereby increase the electrical insulation performance of the secondary battery.

Moreover, a further advantageous effect of the present invention, is that the electrical insulation between the module housing and the secondary battery may be of a simplified design or may be omitted during the manufacture of the secondary battery module, which leads to reduced manufacture cost and manufacture time.

### BRIEF DESCRIPTION OF THE DRAWINGS

FIG. 1a is a front view illustrating a pouch type secondary battery according to the related art.
FIG. 1b is a cross-sectional view illustrating a cross section of the pouch type secondary battery in a direction I-I in FIG. 1a.
FIG. 1c is an image showing damage of a partial region of a secondary battery in the pouch type secondary battery in FIG. 1a.
FIG. 2 is a front view illustrating a pouch type secondary battery according to the present invention.
FIG 3 is a cross-sectional view illustrating a cross section of the pouch type secondary battery in a direction II - II in FIG. 2.
FIG. 4 is a cross-sectional view illustrating a cross section of the pouch type secondary battery in a direction III-III in FIG. 2.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

### Pouch type secondary battery

The present invention provides a pouch type secondary battery 10 including an electrode assembly 100 which includes an electrode and a separator, and a pouch 200 in which the electrode assembly 100 is embedded. The pouch 200 includes an accommodation part 210 in which the electrode assembly 100 is accommodated, and an edge part 220 disposed along the outer circumference of the accommodation part 210 to define an edge, the edge part 220 includes an electrically insulating edge part 221 having an electrically insulating material, and, in the electrically insulating edge part 221, a first electrically insulating layer 221a and a second electrically insulating layer 221b are stacked in sequence from the inside toward the outside.

The electrode assembly 100 is a component, which includes the electrode (not shown) and the separator (not shown), and may have various configurations.

In more detail, the electrode assembly 100 may include the electrode including a positive electrode and a negative electrode, and the separator interposed between the electrodes. Here, the positive electrode may be provided by coating an electrode collector with a positive electrode active material, and the negative electrode may be provided by coating an electrode collector with a negative electrode active material.

Such an electrode assembly 100 may be provided as a stacked type electrode assembly, in which a separator is interposed between a positive electrode and a negative electrode, a jelly-roll type electrode assembly, a stacked/folded type electrode assembly combining the stacked type and the jelly-roll type, or the like.

An electrode lead 300 that may be electrically connected to another secondary battery or an external device may be connected to each of the positive electrode and the negative electrode described above.

The electrode lead 300 is a component, which is connected to the electrode and protrudes from the pouch 200 to be described later toward the outside, and may have various configurations.

In more detail, the electrode lead 300 may have one end that is connected to electrode tabs (not shown) provided in the electrode, and the other end that protrudes to the outside of the pouch 200 to be connected to the other secondary battery or the external device. Accordingly, the electrode lead 300 may electrically connect the electrode assembly 100 accommodated inside the pouch 200 to the other secondary battery or the external device outside the pouch 200.

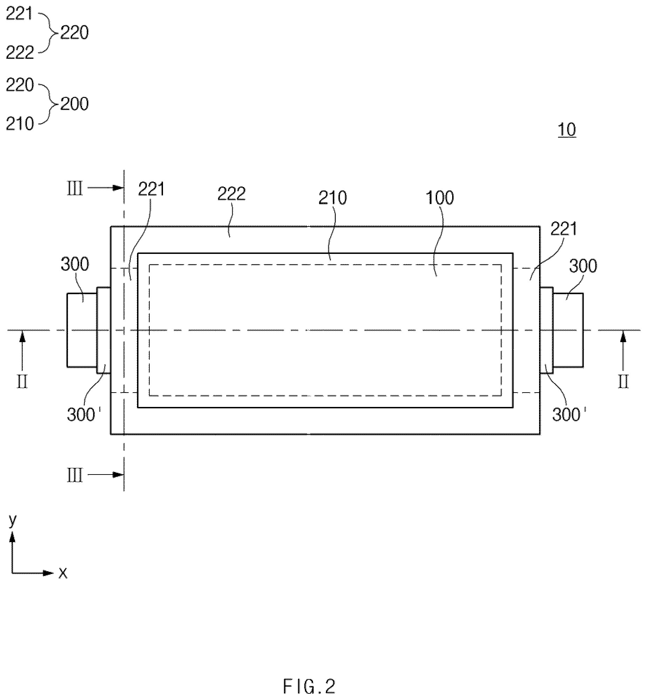

Here, the electrode lead 300 may protrude from at least one end of the pouch 200 toward the outside. In one example, the electrode lead 300 may protrude from one end of the pouch 200 in one direction. In another example, the electrode lead 300 may protrude from each of both ends of the pouch 200 in an opposite direction to another (see FIG. 2).

A material having electrical conductivity shall be used as the material of the electrode lead 300 without being particularly limited. For example, the material of the electrode lead 300 may include at least one of copper (Cu), aluminum (Al), nickel (Ni), iron (Fe), carbon (C), chromium (Cr), or manganese (Mn). However, the material of the electrode lead 300 is not limited to the foregoing materials, and may be variously selected in consideration of mechanical strength, flexibility, processability, and so on.

According to the invention, a lead film 300' made of an electrically insulating material is additionally attached to each of both sides of the electrode lead 300 in order to increase sealability of the pouch 200 and sufficiently secure electrical isolation.

The pouch 200 is a component, in which the electrode assembly 100 described above is embedded, and may have various configurations.

Specifically, the electrode assembly 100 is accommodated in the pouch 200, and a region surrounding the region in which the electrode assembly 100 is accommodated is sealed to physically or chemically protect the electrode assembly 100 from the outside.

Such a pouch 200 includes the accommodation part 210, in which the electrode assembly 100 is accommodated, and the edge part 220 disposed along the outer circumference of the accommodation part 210 to define the edge.

Here, the accommodation part 210 is a component of the pouch 200, in which the electrode assembly 100 is accommodated, and may have various configurations.

For example, any region is available as the accommodation part 210 as long as having an inner empty space defined so as to accommodate the electrode assembly 100. Not only the electrode assembly 100 but also an electrolyte, etc., may be accommodated in the inner empty space.

The accommodation part 210 includes a metal layer 210c so as to protect internal components such as the electrode assembly 100 and the electrolyte, to complement the electrochemical properties by the electrode assembly 100 and the electrolyte, to improve heat resistance, and so on. The accommodation part 210 includes a first electrically insulating layer 210a and a second electrically insulating layer 210b, each of which is made of an electrically insulating material, for electrical isolation between the metal layer 210c and internal and external components of the pouch 200.

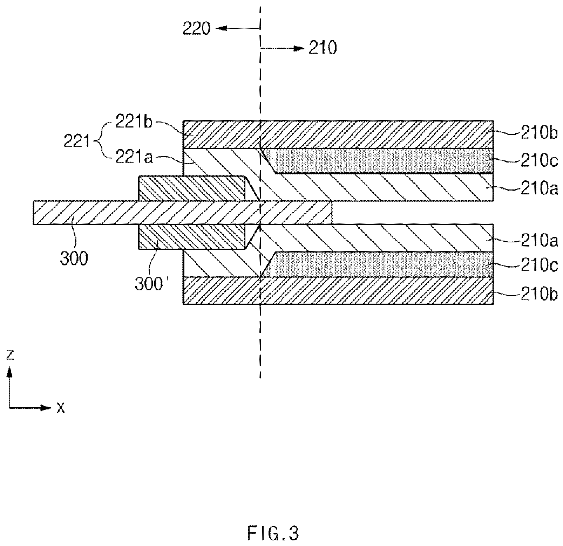

Here, the first electrically insulating layer 210a, the metal layer 210c, and the second electrically insulating layer 210b are stacked in sequence from the inside toward the outside of the pouch 200 as illustrated in FIG. 3.

Here, polypropylene (PP) may be used in the first electrically insulating layer 210a, polyethylene terephthalate (PET) may be used in the second electrically insulating layer 210b, and aluminum (Al) or the like may be used in the metal layer 210c. However, the materials of the first electrically insulating layer 210a, the second electrically insulating layer 210b, and the metal layer 210c are not limited thereto, and may be used without being particularly limited as long as the first electrically insulating layer 210a and the second electrically insulating layer 210b each have an electrically insulating material and the metal layer 210c has a metal material.

The edge part 220 is a component, which is disposed along the outer circumference of the accommodation part 210 to define an edge, and may have various configurations.

Specifically, as illustrated in FIG. 2, the edge part 220 is disposed so as to surround the accommodation part 210 at the outer circumference of the accommodation part 210 of the pouch 200, and define an edge portion of the pouch 200. Here, the edge part 220 may be integrated with the accommodation part 210. Here, in terms of the structure of the pouch 200, a side surface of the edge part 220, which is disposed in a direction opposite to a direction facing the accommodation part 210, may be exposed to the outside.

The edge part 220 is sealed so as to physically or chemically protect the electrode assembly 100, which is accommodated in the accommodation part 210 as described above, from the outside. For example, as the pouch 200 includes an upper pouch portion and a lower pouch portion, the edge part 220 may be sealed by being heated and compressed in a state in which the upper pouch and the lower pouch overlap each other.

Like the accommodation part 210 described above, the edge part 220 has a structure in which layers made of different materials are stacked. Here, the edge part 220 includes the electrically insulating edge part 221 having an electrically insulating material so as to improve the electrical insulation performance of the pouch type secondary battery 10.

In more detail, the electrically insulating layer 221 is a component, in which the first electrically insulating layer 221a and the second electrically insulating layer 221b are stacked in sequence from the inside toward the outside, and may have various configurations.

Here, any material may be available as the first electrically insulating layer 221a and the second electrically insulating layer 221b as long as the any material is a material having electrical insulation properties.

For example, at least one of the first electrically insulating layer 221a and the second electrically insulating layer 221b may have a synthetic resin material. Here, the first electrically insulating layer 221a may include polypropylene (PP), and the second electrically insulating layer 221b may include polyethylene terephthalate (PET). However, the materials of the first electrically insulating layer 221a and the second electrically insulating layer 221b are not limited thereto, and a material having electrical insulation properties may be used for the first electrically insulating layer 221a and the second electrically insulating layer 221b without being particularly limited.

The electrically insulating edge part 221 may be formed in the edge part 220 in various methods. According to the invention, the electrically insulating edge part 221 is formed in a specific region of the edge part 220.

Here, the insulating edge part 221 is formed at a position corresponding to the electrode lead 300 so as to secure a maximum electrical separation distance of the electrode lead 300 having a metal material. An insulating edge part 221 may additionally be provided in any other region of the edge part 220.

In more detail, as the electrode lead 300 protrudes at least from one end of the pouch 200 toward the outside as described above, the insulating edge part 221 is formed at said end of the pouch 200, from which the electrode lead 300 protrudes, as illustrated in FIG. 2.

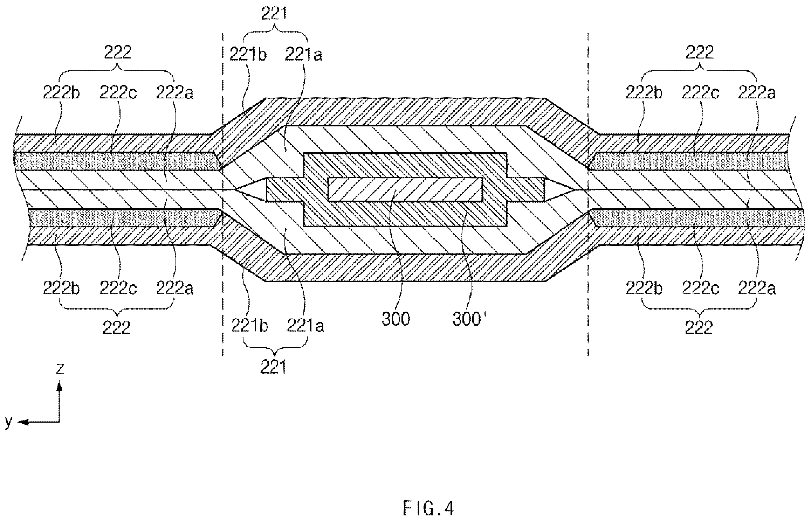

Here, the insulating edge part 221 is disposed so as to surround the electrode lead 300 at the end of the pouch 200. That is, as illustrated in FIGS. 3 and 4, the insulating edge part 221 is formed in a region of the edge part 220, which is provided to face the electrode lead 300, and thus disposed so as to surround the electrode lead 300. Here, when the lead film 300' made of an insulating material is attached to each of the both surfaces of the electrode lead 300, the insulating edge part 221 is also disposed so as to surround the lead film 300'.

In regard to the arrangement of the insulating edge part 221, a difference between the width of the insulating edge part 221 and the width of the lead film 300' is equal to or greater than a difference between the width of the lead film 300' and the width of the electrode lead 300. Here, the width is a width in a Y-axis direction in FIG. 2.

A preferred spaced distance between one end of the insulating edge part 221 and one end of the lead film 300' may be equal to or greater than the thickness of the lead film 300'. Here, the one end of the insulating edge part 221 may be the leftmost portion of the insulating edge part 221 in FIG. 3, and the one end of the lead film 300' may be the leftmost portion of the lead film 300' in FIG. 3.

The preferred arrangement relationship between the insulating edge part 221 and the lead film 300' described above may be an arrangement relationship to stably exhibit the electrical insulation performance necessary for the insulating edge part 221 and the lead film 300'.

The edge part 220 may further include a coating edge part 222 disposed in a region other than the specific region in which the insulating edge part 221 is formed.

Here, the coating edge part 222 may have various configurations. For example, the coating edge part 222 is provided adjacent to the insulating edge part 221, and disposed alternately with the insulating edge part 221 to constitute the edge part 220.

As illustrated in FIG. 4, the coating edge part 222 has a structure in which a first insulating layer 222a, a metal layer 222c, and a second insulating layer 222b are stacked in sequence from the inside toward the outside.

Here, polypropylene (PP) may be used in the first insulating layer 222a, polyethylene terephthalate (PET) may be used in the second insulating layer 222b, and aluminum (Al) or the like may be used in the metal layer 222c. However, the materials of the first insulating layer 222a, the second insulating layer 222b, and the metal layer 222c are not limited thereto, and may be used without being particularly limited as long as the first insulating layer 222a and the second insulating layer 222b each are an insulating material and the metal layer 222c is a metal material.

The edge part 220 may be sealed as described above. In regard to a sealing method of the edge part 220, when the edge part 220 includes the insulating edge part 221 and the coating edge part 222, the sealing method may include two steps.

Specifically, the sealing method according to the present invention includes a first sealing step of sealing the insulating edge part 221 having an insulating material in the edge part 220, and a second sealing step of sealing the coating edge part 222 in the edge part 220. Here, the coating edge part 222 is a portion of the edge part 220 excluding the insulating edge part 221.

A sealing temperature in the second sealing step is higher than a sealing temperature in the first sealing step. In this regard, while the insulating edge part 221 includes the first insulating layer 221a and the second insulating layer 221b, the coating edge part 222 further includes in addition to the first insulating layer 222a and the second insulating layer 222b, the metal layer 222c disposed therebetween. Thus, a temperature higher than that of the insulating layer 221 may be required in order to seal the coating edge part 222.

Departing from the sealing method according to the present invention, one may also consider a non-claimed solution wherein the insulating edge part 221 and the coating edge part 222 are sealed by one step.

In the contents described above, the components denoted as different reference numerals but called the same name may be components integrated with each other. That is, the first insulating layer 210a included in the accommodation part 210, the first insulating layer 221a included in the insulating edge part 221 of the edge part 220, and the first insulating layer 222a included in the coating edge part 222, may be integrated with one another. The second insulating layer 210b included in the accommodation part 210, the second insulating layer 221b included in the insulating edge part 221 of the edge part 220, and the second insulating layer 222b included in the coating edge part 222, may be integrated with one another. The metal layer 210c included in the accommodation part 210, and the metal layer 222c included in the coating edge part 222 of the edge part 220, may be integrated with each other.

### Secondary battery module

The present invention also provides a secondary battery module (not shown) including a plurality of pouch type secondary batteries 10 described above. Here, the description of the pouch type secondary batteries 10 is displaced with the contents described above.

Specifically, the plurality of pouch type secondary batteries 10 may be accommodated in a module housing (not shown) in which a spaced is defined. Here, the pouch type secondary batteries 10 according to the present invention do not require an additional electrical insulation design for isolation between the module housing and the secondary batteries and thus, has advantages that a manufacture time and manufacture cost for the secondary battery module may be reduced.

### Pouch

The present invention makes use of a pouch 200 including an accommodation part 210, in which an empty space is defined, and an edge part 220 which is disposed along the outer circumference of the accommodation part 210 to define an edge. The the edge part 220 includes an insulating edge part 221 having an insulating material, and, in the insulating edge part 221, a first insulating layer 221a and a second insulating layer 221b are stacked in sequence from the inside toward the outside. Here, the detailed description of the pouch 200 may be displaced with the description of the pouch 200 of the pouch type secondary battery 10 described above.

Although the present invention has been described with reference to the limited embodiments and drawings, the present invention is not limited thereto and may be variously implemented by those of ordinary skill in the art to which the present invention pertains, as long as these implementations fall within the scope of the appended claims.

### [Description of the Symbols]

10: Pouch type secondary battery
100: Electrode assembly
200: Pouch
210: Accommodation part
210a: First insulating layer
210b: Second insulating layer
210c: Metal layer
220: Edge part
221: Insulating edge part
221a: First insulating layer
221b: Second insulating layer
221c: Metal layer
222: Coating edge part
222a: First insulating layer
222b: Second insulating layer
222c: Metal layer
300: Electrode lead
300': Lead film

## Claims

1. A pouch type secondary battery (10) comprising:
an electrode assembly (100), having an electrode and a separator;
a pouch (200) in which the electrode assembly (100) is embedded;
an electrode lead (300) connected to the electrode and protruding from the pouch (200) toward the outside; and
a lead film (300') made of an electrically insulating material attached to each of both surfaces of the electrode lead (300);
wherein the pouch (200) comprises an upper pouch portion and a lower pouch portion;
an accommodation part (210) between the upper pouch portion and the lower pouch portion in which the electrode assembly (100) is accommodated; and
an edge part (220) obtained by sealing the upper pouch portion and the lower pouch portion
along an outer circumference of the accommodation part (210) to define an edge,
wherein, at the edge part (220), the upper pouch portion and the lower pouch portion are each made of a first insulating layer (222a), a metal layer (222c), and a second insulating layer (222b) stacked in sequence from the inside toward the outside of the pouch (200), thereby defining a coating edge part (222) except at a position corresponding to the electrode lead (300), where the upper pouch portion and the lower pouch portion are each made of
a first electrically insulating layer (221a) and a second electrically insulating layer (221b) stacked in sequence from the inside toward the outside of the pouch (200), and disposed so as to surround the lead film (300'), thereby defining an insulating edge part (221),
**characterized in that**
the width of the lead film (300'), measured in a direction where the electrically insulating edge part (221) and the coating edge part (222) are adjacent, is larger than the width of the electrode lead (300) and wherein a difference between a width of the electrically insulating edge part (221) disposed so as to surround the lead film (300') and a width of the lead film (300') is equal to or greater than a difference between the width of the lead film (300') and a width of the electrode lead (300).

2. The pouch (200) type secondary battery (10) of claim 1, wherein the
electrode lead (300) protrudes from at least one end of the pouch (200) toward the outside.

3. The pouch (200) type secondary battery (10) of claim 1, wherein at least one of the first electrically insulating layer (210a, 221a) or the second electrically insulating layer (210b, 221b) has a synthetic resin material.

4. The pouch (200) type secondary battery (10) of claim 3, wherein the first electrically insulating layer (210a, 221a) comprises polypropylene (PP).

5. The pouch (200) type secondary battery (10) of claim 3, wherein the second insulating layer (210b, 221b) comprises polyethylene terephthalate (PET).

6. A secondary battery module comprising a plurality of pouch type secondary batteries (100) according to claim 1.

7. A pouch sealing method for sealing a pouch type secondary battery (10) according to one of the preceding claims at an edge of a pouch (200) in which an electrode assembly (100) comprising an electrode and a separator is embedded, the pouch sealing method comprising:
providing a pouch (200) comprising
an accommodation part (210) in which the electrode assembly (100) is accommodated; and
an edge part (220) disposed along an outer circumference of the accommodation part (210) to define an edge, the edge part (220) comprising an electrically insulating edge part (221) having an electrically insulating material, the edge part (220) further comprising a coating edge part (222) which includes, in addition to the first insulating layer and the second insulating layer, a metal layer (222c) disposed therebetween,
a first sealing step of sealing an electrically insulating edge part (221); and
a second sealing step of sealing the coating edge part (222) at a portion of the edge excluding the electrically insulating edge part (221),
wherein a sealing temperature in the second sealing step is higher than a sealing temperature in the first sealing step.

## Patentansprüche

1. Sekundärbatterie (10) vom Beuteltyp (200), umfassend:
eine Elektrodenbaugruppe (100) mit einer Elektrode und einem Separator;
einen Beutel (200), in den die Elektrodenbaugruppe (100) eingebettet ist;
einen Elektrodenanschluss (300), der mit der Elektrode verbunden ist und aus dem Beutel (200) nach außen ragt; und
eine Anschlussfolie (300') aus einem elektrisch isolierenden Material, die an jeder der beiden Oberflächen der Elektrodenleitung (300) angebracht ist;
wobei die Hülle (200) einen oberen Hüllenabschnitt und einen unteren Hüllenabschnitt umfasst;
einen Aufnahmeteil (210) zwischen dem oberen Beutelabschnitt und dem unteren Beutelabschnitt, in dem die Elektrodenbaugruppe (100) aufgenommen ist; und
einen Randabschnitt (220), der durch Verschweißen des oberen Beutelabschnitts und des unteren Beutelabschnitts entlang eines Außenumfangs des Aufnahmeteils (210) erhalten wird, um einen Rand zu bilden,
wobei am Randabschnitt (220) der obere Beutelabschnitt und der untere Beutelabschnitt jeweils aus einer ersten isolierenden Schicht (222a), einer Metallschicht (222c) und einer zweiten isolierenden Schicht (222b) gebildet sind, die von der Innenseite zur Außenseite des Beutels (200) sukzessive übereinandergeschichtet sind, wodurch ein Beschichtungskantenabschnitt (222) definiert wird, außer an einer Position, die der Elektrodenleitung (300) entspricht, wo der obere Beutelabschnitt und der untere Beutelabschnitt jeweils aus
einer ersten elektrisch isolierenden Schicht (221a) und einer zweiten elektrisch isolierenden Schicht (221b) gebildet sind, die
von der Innenseite zur Außenseite des Beutels (200) sukzessive gestapelt sind und so angeordnet sind, dass sie die Anschlussfolie (300') umgeben, wodurch ein isolierender Randabschnitt (221) definiert wird,
**dadurch gekennzeichnet, dass**
die Breite der Anschlussfolie (300'), gemessen in einer Richtung, in der der elektrisch isolierende Randabschnitt (221) und der Beschichtungsrandabschnitt (222) aneinandergrenzen, größer ist als die Breite der Elektrodenleitung (300), und wobei eine Differenz zwischen einer Breite des elektrisch isolierenden Randabschnitts (221), der so angeordnet ist, dass er die Anschlussfolie (300') umgibt, und einer Breite der Anschlussfolie (300') gleich oder größer ist als eine Differenz zwischen der Breite der Anschlussfolie (300') und einer Breite der Elektrodenleitung (300).

2. Sekundärbatterie (10) vom Beuteltyp (200) nach Anspruch 1, wobei die Elektrodenleitung (300) von wenigstens einem Ende des Beutels (200) nach außen vorsteht.

3. Sekundärbatterie (10) vom Beuteltyp (200) nach Anspruch 1, wobei wenigstens eine der ersten elektrisch isolierenden Schichten (210a, 221a) oder der zweiten elektrisch isolierenden Schichten (210b, 221b) ein Kunstharzmaterial aufweist.

4. Sekundärbatterie (10) vom Beuteltyp (200) nach Anspruch 3, wobei die erste elektrisch isolierende Schicht (210a, 221a) Polypropylen (PP) umfasst.

5. Sekundärbatterie (10) vom Pouch-Typ (200) nach Anspruch 3, wobei die zweite Isolierende Schicht (210b, 221b) Polyethylenterephthalat (PET) umfasst.

6. Sekundärbatteriemodul, das eine Vielzahl von Sekundärbatterien (100) vom Pouch-Typ gemäß Anspruch 1 umfasst.

7. Beutelschließverfahren zum Verschließen einer Sekundärbatterie (10) vom Beuteltyp gemäß einem der vorstehenden Ansprüche an einer Kante eines Beutels (200), in den eine Elektrodenbaugruppe (100), die eine Elektrode und einen Separator umfasst, eingebettet ist, wobei das Verfahren zum Verschließen des Beutels umfasst:
Bereitstellen eines Beutels (200), der umfasst
ein Aufnahmeteil (210), in dem die Elektrodenbaugruppe (100) untergebracht ist; und
einem Randteil (220), der entlang eines Außenumfangs des Aufnahmeteils (210) angeordnet ist, um eine Kante zu definieren, wobei der Randabschnitt (220) einen elektrisch isolierenden Randabschnitt (221) aus einem elektrisch isolierenden Material umfasst, wobei der Randabschnitt (220) ferner einen beschichteten Randabschnitt (222) umfasst, der zusätzlich zu der ersten isolierenden Schicht und der zweiten isolierenden Schicht eine dazwischen angeordnete Metallschicht (222c) enthält,
einen ersten Versiegelungsschritt zum Versiegeln eines elektrisch isolierenden Randteils (221); und
einen zweiten Versiegelungsschritt zum Versiegeln des Beschichtungsrandteils (222) an einem Abschnitt des Randes unter Ausschluss des elektrisch isolierenden Randteils (221),
wobei die Versiegelungstemperatur im zweiten Versiegelungsschritt höher ist als die Versiegelungstemperatur im ersten Versiegelungsschritt.

## Revendications

1. Batterie secondaire de type poche (10) comprenant :
un ensemble d'électrodes (100) comprenant une électrode et un séparateur ;
une poche (200) dans laquelle l'ensemble d'électrodes (100) est encastré ;
un conducteur d'électrode (300) connecté à l'électrode, et faisant saillie de la poche (200) vers l'extérieur ; et
un film conducteur (300') réalisé avec un matériau électro-isolant fixé sur chacune de deux surfaces du conducteur d'électrode (300) ;
la poche (200) comprenant une partie de poche supérieure et une partie de poche inférieure ;
une partie de logement (210) entre la partie de poche supérieure et la partie de poche inférieure dans laquelle est logé l'ensemble d'électrodes (100) ; et
une partie marginale (220) obtenue en scellant la partie de poche supérieure et la partie de poche inférieure le long d'une circonférence extérieure de la partie de logement (210) pour définir un bord,
la partie de poche supérieure et la partie de poche inférieure étant composées chacune, à la partie marginale (220), d'une première couche isolante (222a), d'une couche métallique (222c), et d'une deuxième couche isolante (222b) empilées en séquence de l'intérieur vers l'extérieur de la poche (200), en définissant ainsi une partie marginale de revêtement (222) excepté dans une position correspondant au conducteur d'électrode (300), la partie de poche supérieure et la partie de poche inférieure étant réalisées chacune avec
une première couche électro-isolante (221a) et une deuxième couche électro-isolante (221b) empilées en séquence de l'intérieur vers l'extérieur de la poche (200), et disposées de façon à entourer le film conducteur (300'), en définissant ainsi une partie de bord isolant (221),
**caractérisée en ce que**
la largeur du film conducteur (300'), mesurée dans une direction où la partie de bord isolant (221) et la partie de revêtement (222) sont adjacentes, est supérieure à la largeur du conducteur d'électrode (300), et une différence entre une largeur de la partie de bord électro-isolant (221), disposé de façon à entourer le film conducteur (300'), et une largeur du film conducteur (300'), est égale ou supérieure à une différence entre la largeur du film conducteur (300') et une largeur du conducteur d'électrode (300).

2. Batterie secondaire (10) de type poche (200) selon la revendication 1, le conducteur d'électrode (300) dépassant d'au moins un bout de la poche (200) vers l'extérieur.

3. Batterie secondaire (10) de type poche (200) selon la revendication 1, au moins une de la première couche électro-isolante (210a, 221a) ou de la deuxième couche électro-isolante (210b, 221b) possédant une matière de résine synthétique.

4. Batterie secondaire (10) de type poche (200) selon la revendication 3, la première couche électriquement isolante (210a, 221a) comprenant du polypropylène (PP).

5. Batterie secondaire (10) de type poche (200) selon la revendication 3, la deuxième couche électriquement isolante (210b, 221b) comprenant du polyéthylène téréphtalate (PET).

6. Module de batterie secondaire comprenant une pluralité de batteries secondaires de type poche (100) selon la revendication 1.

7. Procédé de scellement de poche pour le scellement d'une batterie secondaire (10) de type poche selon une quelconque des revendications précédentes à un bord d'une poche (200) dans laquelle un ensemble d'électrodes (100), comprenant une électrode et un séparateur, est encastré, le procédé de scellement de poche comprenant :
l'agencement d'une poche (200) comprenant :
une partie de logement (210) dans laquelle est reçu l'ensemble d'électrodes (100) ; et
une partie marginale (220) disposée le long d'une circonférence extérieure de la partie de logement (210) pour définir un bord, la partie marginale (220) comprenant une partie marginale électro-isolante (221) possédant une matière électro-isolante, la partie marginale (220) comprenant en outre une partie marginale de revêtement (222) comprenant, en plus de la première couche isolante et de la deuxième couche isolante, une couche métallique (222c) disposées entre elles,
une première étape de scellement d'une partie marginale électriquement isolante (221) ; et
une deuxième étape de scellement d'une partie marginale de revêtement (222) à une partie du bord excepté la partie marginale électro-isolante (221),
une température de scellement dans la deuxième étape de scellement étant supérieure à une température de scellement dans la première étape de scellement.
